# EUROPEAN PATENT SPECIFICATION

(11) **EP 4 419 754 B1**
(45) Date of publication and mention of the grant of the patent: **07.10.2026**
(21) Application number: 22884145.8
(22) Date of filing: 19.10.2022
(51) Int. Cl.: E02F 3/88, E02F 5/28, E02F 3/90, E02F 3/92, B65G 53/24, B65G 53/30, B65G 53/40

(54) **DEVICE AND METHOD FOR REMOVING GRANULAR MATERIAL**
VORRICHTUNG UND VERFAHREN ZUM ENTFERNEN VON KÖRNIGEM MATERIAL
DISPOSITIF ET PROCÉDÉ D'ÉLIMINATION DE MATÉRIAU GRANULAIRE

(30) Priority: 22.10.2021 NO 20211271
(43) Date of publication of application: 28.08.2024
(73) Proprietor: Granfoss AS, 0978 Oslo (NO)
(72) Inventor: TAYEBI, Davoud, 0351 Oslo (NO)
(74) Representative: Bryn Aarflot AS
(86) International application number: PCT/NO2022/050239
(87) International publication number: WO 2023/068943

(56) References cited:
- WO-A1-2006/055989
- WO-A2-2008/046115
- WO-A2-2008/046115
- FR-A- 332 307
- GB-A- 1 287 071
- JP-A- H03 151 422
- JP-Y2- S6 032 028
- KR-A- 20200 093 998

## Description

### Technical Field

The present invention concerns the removal of granular materials from a granular material mass. Specifically, the present invention concerns a suction head, a device, and a method for removing granular material.

### Background

The removal of granular material from a granular material mass may be required in various settings. For instance, waterways for commercial shipping may require regular dredging to prevent undesired accumulation of granular materials, such as sand or other sediments, hindering marine traffic. Mining, both onshore and on the seafloor, may require the excavation of granular materials to retrieve desired materials. Reinforcement of vulnerable coastlines and / or the construction of artificial peninsulas or artificial islands requires the excavation of large volumes of granular materials, usually from locations further offshore. The anchoring of equipment or the laying of cables, both onshore and offshore, may require excavation of holes or trenches in a sediment layer. Removal of accumulated granular materials may be required for industrial basins, from containers or vessels in which granular material accumulates during industrial processes, or from behind artificial dams. Finally, dredging of large volumes of granular material may be required to release a grounded or stranded vessel in shallow waters. In each case, the granular material mass may be submerged or partially submerged beneath a fluid. Alternatively, the granular material mass may be non-submerged. The granular material may comprise clay, silt, sand, gravel, or combinations thereof. Additionally, or alternatively, the granular material may comprise metal, plastics, biomass, ceramics, concrete, glass, minerals, composites, or combinations thereof.

Preferable methods for efficiently removing granular material utilize suction, applied locally to the granular material mass by a suction head. A suction head usually comprises a dome-shaped, tube-shaped, or bell-shaped element that is moveable over the granular material. A mixture of granular material and fluid is sucked into the suction head. From the suction head the mixture is pumped through a pipe and deposited elsewhere. To increase the effectivity of the granular material removal, suction may be combined with a local fluidization of the granular material. Local fluidization destroys or partially destroys cohesion between particles within the granular material mass, thereby allowing the resulting fluidized granular material to be easily removed by suction applied through the suction head. To achieve local fluidization, mechanical means, such as blades, spiked rollers, or drill heads, may be provided. Such mechanical means loosen the granular material mass and facilitate the intrusion of fluid therein. Additionally, or alternatively, fluid may be jetted into the submerged granular material mass to achieve fluidization. Alternatively, for granular materials with low cohesion between particles, the applied suction may be sufficient to achieve local fluidization. Such a device is shown in WO 2008/046115 A2.

A problem with devices utilizing suction is that the applied suction may cause the suction head to be sucked downward and / or into the granular material mass. Thereby the suction head may become partially or completely immobilized in the granular material. Consequently, both the mobility of the suction head and the capacity to remove granular material from the granular material mass are adversely affected. Such an immobilization of the suction head is especially disadvantageous when the device must be moved to cover large areas or when the device must be moved around an object, such as a stranded vessel or a fixed structure. In the latter case it is important that the suction head can be freely moved around the hull of the vessel or the structure, to achieve a precise and even removal of granular material.

Therefore, there is a clear need for an improved device for removing granular material, wherein the risk of the suction head becoming partially or completely immobilized by being sucked into the granular material mass is avoided.

There is also a great risk of stirring up substances from the seabed that move into the water mass and that is not sucked into the suction head. This is a substantial disadvantage if the seabed contains pollution, poisonous substances etc. Stirring solids into the water mass is also a disadvantage when working in areas with currents as the solids will be entrained in the water and will be deposited elsewhere. This is typical for rivers and in areas with tidal currents.

It may also be a disadvantage if marine life is covered with material such as silt, sand and mud from the seabed that has been mixed with the surrounding water during the removal of granular material.

Accordingly, it is a considerable advantage to be able to remove solids from the seabed without stirring solids or other unwanted substance into the surrounding water.

### Summary of the invention

The present invention concerns a device for removing granular material by suction according to claim 1 and a method for removal of granular material by suction from a granular material mass according to claim 19.

It is an object of the present invention to provide a device and method for removing granular material that is effective, and that provides a low disturbance of the granular material that is not sucked into the device.

This is according to the invention achieved with a

### Figures

Figure 1A schematically shows a side view of a suction head according of the present invention comprising a first configuration.
Figure 1B schematically shows a bottom view of a suction head according to the present invention comprising a first configuration.
Figure 1C schematically shows a side view of a suction head according of the present invention comprising an alternative outlet configuration.
Figure 1D schematically shows a side view of a suction head according of the present invention comprising a further alternative outlet configuration.
Figure 1E schematically shows a side view of the helical flow within and around a suction head according to the present invention.
Figure 1F schematically shows a side view of the suction driven flow within and the helical flow around a suction head according to the present invention.
Figure 2A shows a bottom view of the suction head according to the present invention according to a second configuration.
Figure 2B shows a bottom view of the suction head according to the present invention according to a third configuration.
Figure 2C shows a bottom view of the suction head according to the present invention according to a fourth configuration.
Figure 2D shows a bottom view of the suction head according to the present invention according to fifth configuration.
Figure 2E shows a bottom view of the suction head according to the present invention according to a sixth configuration.
Figure 3A schematically shows the suction head according to the present invention comprising a first lateral shearing element.
Figure 3B schematically shows the suction head according to the present invention comprising a second lateral shearing element.
Figure 4A schematically shows the device according to the present invention comprising a first configuration with multiple suction heads.
Figure 4B schematically shows the device according to the present invention comprising a second configuration with multiple suction heads.
Figure 5A schematically shows the device according to the present invention comprising a first flowline configuration.
Figure 5B schematically shows the device according to the present invention comprising a second flowline configuration.
Figure 5C schematically shows the device according to the present invention comprising a third flowline configuration.
Figure 5D schematically shows the device according to the present invention comprising a fourth flowline configuration.

### Detailed description

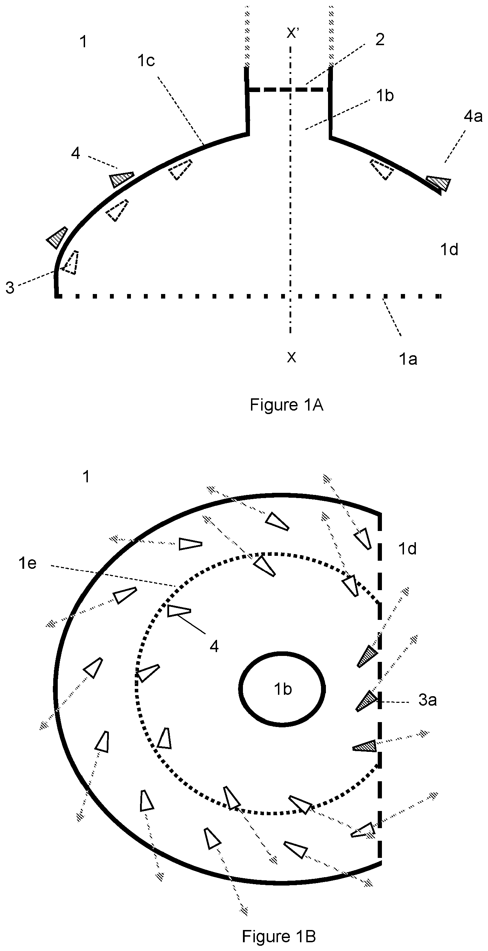

A device for removing granular material according to the present invention is schematically shown in side-view, fig. 1A, and in bottom view, fig. 1B. The same reference signs denote the same features both in fig. 1A and 1B and in all other figures. Exemplary granular materials that can be removed with the suction head comprise gravel, sand, silt, clay, metal, plastics, biomass, wood, food materials, ceramics, concrete, glass, minerals, crystalline materials, composites, waste, or combinations thereof. The granular material may be partially or completely submerged beneath a fluid. The fluid may comprise a liquid, a gas, or combinations thereof. The fluid may, for instance, comprise seawater, fresh water, industrial wastewater, liquid or gaseous hydrocarbons, a processing fluid, a transport fluid, or any combinations thereof.

The device includes a suction head 1. The suction head 1 includes a lower end 1a (black dotted line in fig. 1A), and an outlet 1b. Suction is applied to the suction head 1 through the outlet 1b. The suction head 1 further includes side walls 1c, extending from the lower end 1a to the outlet 1b. Preferably, the side walls 1c extend from the circumference of the lower end 1a to the outlet 1b. Together, the lower end 1a, outlet 1b and side walls 1c delimit the inside, or inner space, of the suction head 1. The central axis x - x' of the suction head 1 is indicated with a dash-dotted line in fig. 1A. The lower end 1a may be centred on the central axis x-x'. Preferably, the lower end 1a is perpendicular to the central axis x-x'. In operation, the suction head 1 is preferably positioned such that the lower end 1a faces the granular material.

The suction head further comprises one or more side inlets 1d, for the inflow of granular material into the suction head 1. The one or more side inlets 1d are located in a side wall 1c (schematically shown in side-view in fig. 1A). In operation, suction is applied to the outlet 1b, granular material is sucked into the suction head 1 through the one or more side inlets 1d and removed from the suction head 1 through the outlet 1b. Advantageously, by applying lateral suction through the side of the suction head, the suction head is prevented from becoming immobilized in the granular material mass by downward suction. The one or more side inlets 1d combined extend over at least 2% of the circumference of the lower end 1a. Alternatively, the one or more side inlets 1d combined extend over 2 - 98%, preferably 5 - 70%, more preferably 15 - 60%, most preferably 20 - 50 %, of the circumference of the lower end 1a. The one or more side inlets 1d combined comprise at least 2%, preferably at least 10%, more preferably at least 30%, most preferably at least 40%, of the total area for inflow of fluidized granular material into the suction head 1. For a suction head 1 with multiple inlets 1d, each side inlet 1d may extend over the same percentage, or over different percentages of the circumference. Each side inlet 1d may further extend from the lower end 1a of the suction head 1, up to at least 10%, preferably at least 20%, more preferably at least 30%, most preferably at least 40% of the height of the suction head 1. For a suction head 1 with multiple inlets 1d, each side inlet 1d may extend up to the same height, or up to different heights.

Additionally, the lower end 1a may comprise a bottom inlet (schematically shown in bottom view in fig. 1B) for the inflow of granular material. The bottom inlet may comprise one or more openings. The bottom inlet may cover the entire lower end 1a. Alternatively, the bottom inlet may cover only a part of the lower end 1a. The bottom inlet and the one or more side inlets 1d may preferably form one connected inlet, as schematically shown in fig. 1B. Alternatively, the lower end 1a may be closed. When the lower end 1a is closed, inflow of fluidized granular material into the suction head 1 occurs through the one or more side inlets 1d only. This configuration may be advantageous when granular material must be removed from a given layer and preferably not from any layer(s) below.

The suction head 1 may have a bell shape, a dome shape (shown in fig. 1A), a cylindrical shape, a spiral shape, a cubic shape, a rectangular shape, a pyramidal shape, a semi-spherical shape, a conical shape, or any other suitable shape. The width of the suction head 1 perpendicular to the central axis x-x' (left to right, in fig. 1A) and the height of the suction head 1 along central axis x-x' (bottom to top in fig. 1A) may be adapted to the intended application. For instance, for seafloor mining operations a wide, cylindrical, or rectangular suction head may be preferable, whereas for dredging around objects, a narrow, semi-spherical suction head may be preferable. The suction head 1 may comprise a metal material, such as aluminum or stainless steel, a polymer material, such as polypropylene or high-density polyethylene, or a composite material, such as a fiber-reinforced polymer. Optionally, the suction head 1 may be coated with a suitable coating, such as a wear resistant coating, an elastic coating, an anti-static coating, an anti-bacterial coating, an anti-fungal coating, an anti-magnetic coating, or an intumescent coating. The suction head 1 may be provided with a bright colour, to improve visibility thereof.

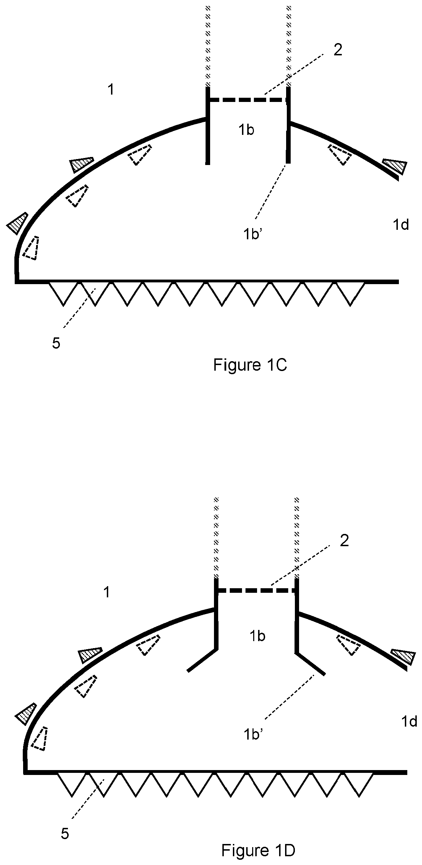

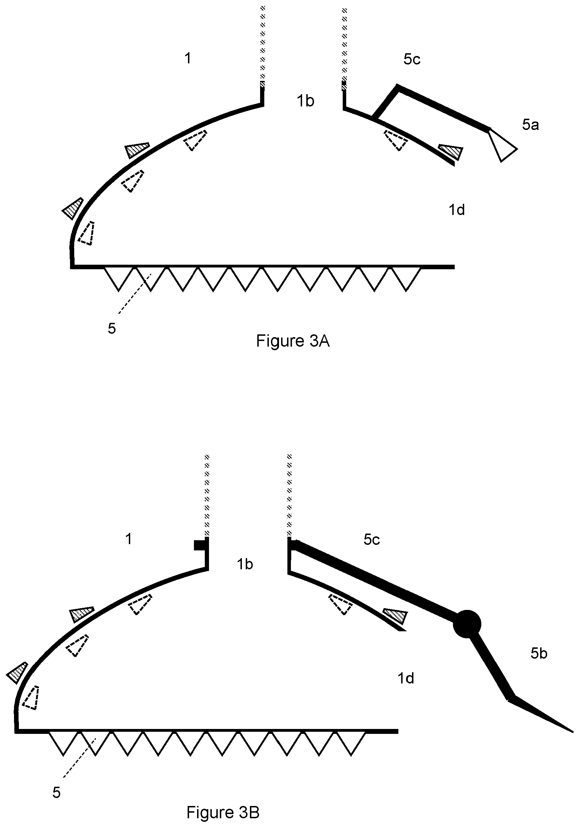

The outlet 1b may be centred on the central axis x-x' of the suction head 1. Alternatively, the outlet 1b may be oriented at an angle with respect to the central axis x-x'. Preferably, the outlet 1b is placed opposite the lower end 1a (fig. 1A). Alternatively, the outlet may be placed on a side of the suction head 1. The surface area of the outlet 1b is preferably equal to, or less than, the surface area of the lower end 1b. The outlet 1b is preferably coupled to a tube (dotted lines in fig. 1A, 1C - 1F, 3A and 3B), as detailed below. Optionally, the outlet 1b may comprise a filter 2, for filtering the granular material entering the outlet 1b. The filter 2 may be configured to block large particles, particle agglomerates and / or contaminating objects from entering the outlet and / or the tube. Further optionally, a filter may be provided at the one or more side inlets 1d and / or the bottom inlet. Advantageously, possible blockage of the outlet and / or tube may thereby be avoided and downstream elements, such as pumps and control valves, may be protected. Additionally, particles above a certain particle diameter may be filtered from the granular material. Such filtering may be advantageous when a granular material of a given maximum particle size is required.

An end-section 1b' of the outlet 1b may extend into suction head 1, see fig. 1C and 1D. The end-section 1b' may serve as a funnel for the fluidized granular material that is sucked int the suction head. Advantageously, backflow of fluidized granular material from the outlet into the suction head may thereby be avoided. The outlet end-section 1b' may comprise a cylindrical shape, see fig. 1C. Alternatively, the outlet end-section 1b' may comprise a funnel shape, as schematically shown in fig. 1D, or a conical shape, a semi-spherical shape, a pyramidal shape, a rectangular shape, or any other suitable shape.

The suction head 1 further comprises one or more nozzles, configured to emit a pressurized fluid. In operation, the pressurized fluid fluidizes the granular material under and around the suction head 1. The fluidized granular material may then more easily be removed by suction, applied through the suction head 1. The one or more nozzles may comprise one or more inner nozzles 3 (striped in fig. 1A), mounted on the inside of the suction head 1. The inner nozzles 3 are preferably configured to generate an inner helical flow within the suction head 1. Advantageously, the inner helical flow submits the granular material mass to rotational shearing, thereby efficiently fluidizing the granular material. More advantageously, when the surface area of the outlet is equal to, or preferably less than, the surface area of the lower end, a strong inner helical flow can be achieved. The inner nozzles 3 may be circumferentially placed around the outlet 1b along one or more inner contour lines 1e of the suction head 1 (dotted line in fig. 1B). The one or more inner contour lines 1e may preferably be parallel inner contour lines. Alternatively, the one or more inner contour lines may be non-parallel or may cross one another. The inner nozzles 3 may be distributed symmetrically along the one or more inner contour lines 1e. Advantageously, a symmetrical distribution of the inner nozzles results in a strong and regular helical flow within the suction head. Alternatively, the inner nozzles 3 may be distributed non-symmetrically along the one or more inner contour lines 1e. Advantageously, power to drive the emission of pressurized fluid from the inner nozzles may thereby be focused on a specific area.

Each inner nozzle 3 may comprise one or more nozzle openings. The one or more nozzle openings of each inner nozzle 3 may be directed in the same direction or in different directions. Alternatively, the one or more inner nozzles 3 may comprise one or more slits. Advantageously, an even distribution of the outflow from the one or more inner nozzles may thereby be achieved. Further advantageously, more fluid can be pumped through the inner nozzles formed as slits, thereby achieving a more powerful inner helical flow. Additionally, one or more secondary inner nozzles 3a may be placed along the one or more side inlets 1d (dark grey in fig. 1B). Advantageously, fluidization and suction of granular material through the open side is thereby improved.

In bottom view, the outflow direction of the one or more inner nozzles 3 may be directed towards the center of the suction head, tangential to the side of the suction head, or outward from the center of the suction head (schematically shown in bottom view in fig. 1B). The outflow direction of selected inner nozzles is schematically indicated with striped arrows in fig. 1B. In sideview, the outflow direction of the one or more inner nozzles and the central axis x-x' (see fig. 1A) may range from 0° - 180°. At 0° the outflow direction points towards the lower end 1a. At 180° the outflow direction points away from the lower end 1a. Preferably, the angle ranges from 0° - 90°, more preferably from 15° - 75°, most preferably from 30° - 60°. The outflow direction of the one or more inner nozzles may be fixed. Alternatively, the outflow direction of the one or more inner nozzles 3 may be adjustable by an adjustment mechanism. The adjustment mechanism may comprise an element to redirect the outflow from each inner nozzle or may comprise means to readjust the orientation of each inner nozzle. Preferably, the one or more secondary inner nozzles 3a placed along the one or more side inlets 1d are directed outwards from the suction head 1. Advantageously, fluidization of granular material in front of the open side may avoid the suction head getting immobilized in the granular material mass. Optionally, one or more inner shearing nozzles may be located at the edge of the one or more side inlets 1d. The one or more inner shearing nozzles may be directed towards the lower end 1a. The angle between the outflow direction of the one or more inner shearing nozzles and the central axis x-x' may range from 0° - 90°, preferably from 0° - 75°, more preferably from 0° - 45°. Advantageously, the one or more inner shearing nozzles point directly into the granular material mass and apply shear thereto.

The one or more nozzles may further comprise one or more outer nozzles 4 (see fig. 1A), mounted to the outside of the suction head 1. The one or more outer nozzles 4 are preferably configured to generate an outer helical flow around the suction head 1. Advantageously, the outer helical flow submits the granular material mass around the suction head in one direction, thereby loosening and fluidizing the granular material. The outer helical flow has the same general flow direction as the inner helical flow. Alternatively, the outer helical flow may have a different flow direction compared to the inner helical flow as long as the overall helical flow is in the same general direction on the outside and the inside. The one or more outer nozzles 4 are preferably mounted along one or more outer contour lines of the suction head 1. The one or more outer contour lines may preferably be parallel outer contour lines. Alternatively, the one or more outer contour lines may be non-parallel or may cross one another. The one or more outer nozzles 4 may be distributed symmetrically along the one or more outer contour lines of the suction head 1. Advantageously, a symmetrical distribution of the outer nozzles results in a strong helical flow around the suction head. Alternatively, the one or more outer nozzles 4 may be distributed non-symmetrically along the one or more outer contour lines of the suction head 1. Advantageously, power to drive the emission of pressurized fluid from the outer nozzles is thereby used where needed.

The one or more outer nozzles 4 may each comprise one or more nozzle openings. The one or more nozzle openings of each outer nozzle 4 may be directed in the same direction or in different directions. Alternatively, the one or more outer nozzles 4 may comprise one or more slits. Advantageously, an even distribution of the outflow from the one or more outer nozzles may thereby be achieved. Further advantageously, more fluid can be pumped through the outer nozzles formed as slits, thereby achieving a better distribution of the flow around the suction head. Additionally, one or more outer nozzles 4 may be placed along the one or more side inlets 1d (see fig. 1A).

In bottom view, the outflow direction of the one or more outer nozzles 4 may be directed towards the side wall 1c, tangential to the side wall 1c, or away from the side wall 1c (fig. 1B). In sideview, the outflow direction of the one or more outer nozzles 4 and the central axis x-x' (see fig. 1A) may range from 0° - 180°. At 0° the outflow direction points towards the lower end. At 180° the outflow direction points away from the lower end. Preferably, the angle ranges from 0° - 90°, more preferably from 15° - 75°, most preferably from 30° - 60°. Optionally, the outflow direction of each outer nozzle 4 may be adjustable by an adjustment mechanism. The adjustment mechanism may comprise an element to redirect the outflow from each outer nozzle 4 or may comprise means to readjust the orientation of each outer nozzle 4. Advantageously, the fluid emitted from the outer nozzles fluidizes the granular material around the suction head, thereby avoiding immobilization of the suction head by being sucked into the granular material mass.

Preferably, one or more secondary outer nozzles 4a are placed along the one or more side inlets 1d. The one or more secondary outer nozzles 4a are preferably directed outwards from the suction head 1. Advantageously, fluidization of granular material in the direct vicinity of the open side may thereby be achieved, thereby improving granular material removal through the open side, and avoiding the suction head getting immobilized in the granular material mass. Optionally, one or more outer shearing nozzles may be located at the edge of the one or more side inlets 1d. The outflow direction of the one or more outer shearing nozzles may be at an angle with the central axis x- x' of 0° - 90°, preferably 0° - 75°, more preferably 0° - 45°. Advantageously, the one or more outer shearing nozzles point directly into the granular material mass and apply shear thereto.

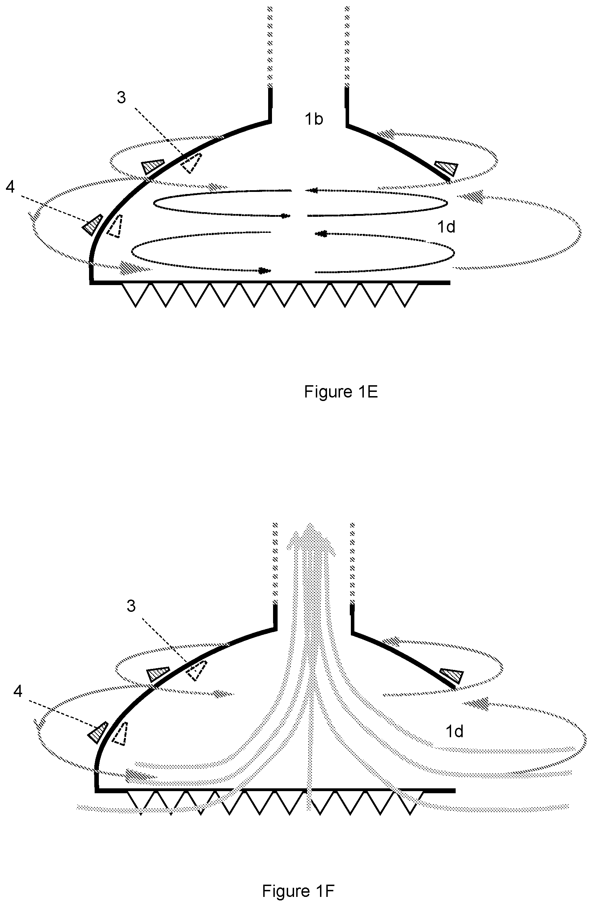

Helical flow within and / or around the suction head 1 is schematically shown in fig. 1E and 1F. In operation, the outflow of pressurized fluid from the inner nozzles 3 preferably generates an inner helical flow within the suction head 1 (black dotted arrows in fig. 1E). The outflow of pressurized fluid from the outer nozzles 4 generates an outer helical flow around the suction head 1 (grey dotted arrows in fig. 1E and 1F). The inner helical flow and outer helical flow generate a rotational shearing, thereby efficiently loosening and fluidizing the granular material. Suction of fluidized granular material into the suction head 1 and into the outlet 1b is driven by suction means and applied through the suction head 1. Suction is schematically shown by grey arrows in fig. 1F, where inner helical flow has been omitted for the sake of clarity. Suction of fluidized granular material occurs through the one or more side inlets 1d and optionally through the bottom inlet. Advantageously, the inner helical flow and / or outer helical flow result in improved fluidization and suction of granular material, thereby improving the efficiency of granular material removal. Further advantageously, in a configuration with one open side (fig. 1A, 1B), fluidization and suction are concentrated to a limited area. Thereby, the fluidization and suction are concentrated, allowing cohesive granular materials to be efficiently removed.

The suction head 1 may further comprise one or more shearing elements 5, schematically shown in fig. 1C and 1D. The shearing elements may be positioned around the lower end 1a, on the side walls 1c, and / or around the outlet 1b. Advantageously, the shearing elements may loosen the granular material mass, thereby improving fluidization of the granular material. The one or more shearing elements 5 may comprise passive shearing elements, such as teeth, blades, or knives. Alternatively, or additionally, the one or more shearing elements 5 may comprise active shearing elements, such as rotating blades, vibrating elements, spiked rollers, or nozzles for emitting high-pressure fluid jets. The active shearing elements may be configured to be driven in a vibrating, a pulsating, and / or a rotating motion. The one or more shearing elements 5 may be retractable, such as retractable blades. Advantageously, the retractable shearing elements can be deployed when needed and retracted otherwise.

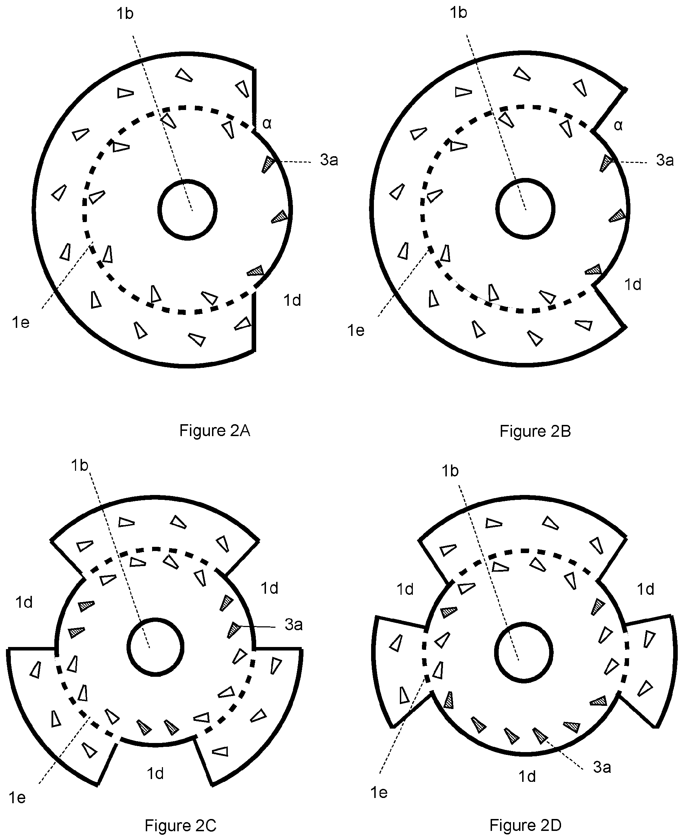

Further configurations of the suction head 1 are schematically shown in bottom view in fig. 2A - 2E. In each further configuration, a side inlet 1d may be partially formed by an inner contour 1e (shown as a solid line in fig. 2A - 2D). According to one further configuration, see fig. 2A, the side inlet 1d is formed by a cut-out from the lower end 1a to the inner contour 1e. Part of the inner contour 1e may thereby form a protruding part. The protruding part extends over the side inlets 1d. Secondary inner nozzles 3a placed along the side inlet 1d may be placed at the protruding part. Advantageously, fluidization of granular material at the open side may thereby take place both from above and from the side. In this configuration, the cut-out is formed locally at an angle α with the inner contour 1e, where angle α may be larger than 90°. Advantageously, fluidization may thereby occur over a larger area, such that a larger volume of granular material may be removed at once. Alternatively, in another further configuration of the suction head 1, the cut-out may be formed locally at an angle α with the inner contour 1e equal to or less than 90°, fig. 2B. Fluidization and suction may thereby be concentrated on a smaller area, such that cohesive or compacted granular material, or coarse granular material such as gravel, can efficiently be removed.

Alternatively, the suction head 1 may comprise two or more side inlets 1d. The two or more side inlets 1d may be symmetrically or non-symmetrically distributed along the circumference of the lower end 1a. A further configuration of the suction head 1 is shown in fig. 2C, where the suction head 1 comprises at least three symmetrically distributed side inlets 1d. Advantageously, the suction head thereby has a symmetric cross section and has no preferable direction of suction. This configuration may be especially advantageous when granular material must be moved around an object, where the suction head must be moved along the outline of the object. Another further configuration of the suction head 1 is shown in fig. 2D, where the suction head 1 comprises at least three non-symmetrically distributed side inlets 1d. One side inlet 1d may comprise a larger portion of the circumference of the lower end 1a than the remaining open sides. For instance, two or more side inlets 1d may be provided, wherein one side inlet extends over 2 - 50% of the circumference of the lower end 1a and the remaining side inlets 1d extend over 2 - 25% of the circumference of the lower end 1a. Advantageously, the open side comprising the largest portion of the circumference may be aligned with the main direction of motion of the suction head, where most granular material may be sucked into the suction head. Simultaneously, the suction head has the capacity to remove granular material through the at least one other side inlet 1d, which is advantageously when the direction of motion of the suction head is reversed.

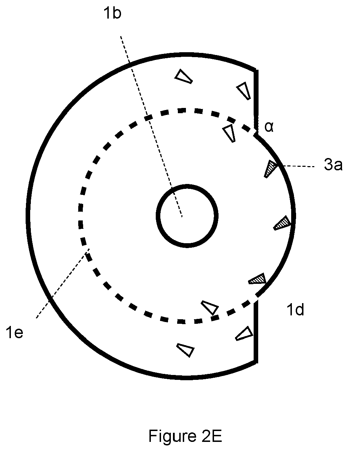

In each of the alternative configurations of fig. 2A - 2D, the inner nozzles 3 and / or the outer nozzles 4 may be distributed symmetrically along the suction head 1. Alternatively, the inner nozzles 3 and / or the outer nozzles 4, may be distributed non-symmetrically along the suction head 1. For instance, the inner nozzles 3 and / or outer nozzles 4 may be positioned in the vicinity of the one or more side inlets 1d only, see fig. 2E. Advantageously, when the open side faces the general direction of motion of the suction head, flow and fluidization is concentrated in the direction of motion and minimized away from the direction of motion

With reference to fig. 3A and 3B, the suction head may comprise at least one lateral shearing element. The at least one lateral shearing element is preferably positioned in front of the one or more side inlets 1d. Advantageously, the at least one lateral shearing element may thereby loosen the granular material mass in front of the at least one open side, to improve the fluidization and removal of granular material through the at least one open side. The lateral shearing element may comprise at least one shearing nozzle 5a, schematically shown in fig. 3A, configured to emit a pressurized fluid. Additionally, or alternatively, the lateral shearing element may comprise at least one mechanical shearing element 5b, schematically shown in fig. 3B. The mechanical shearing element 5b may comprise one or more vibrating blades, one or more rotating blades, one or more bits, one or more pulsating elements, one or more fixed elements, or any combination thereof. The mechanical shearing element 5b may be driven by the motion of the suction head 1, or by a separate driving means, such as a separate electrical motor, or a hydraulic line. Preferably, the lateral shearing element extends laterally from the suction head 1. Thereto, the lateral shearing element may be mounted on an arm 5c. The arm may be a static arm or a moveable arm, such as a robotic arm.

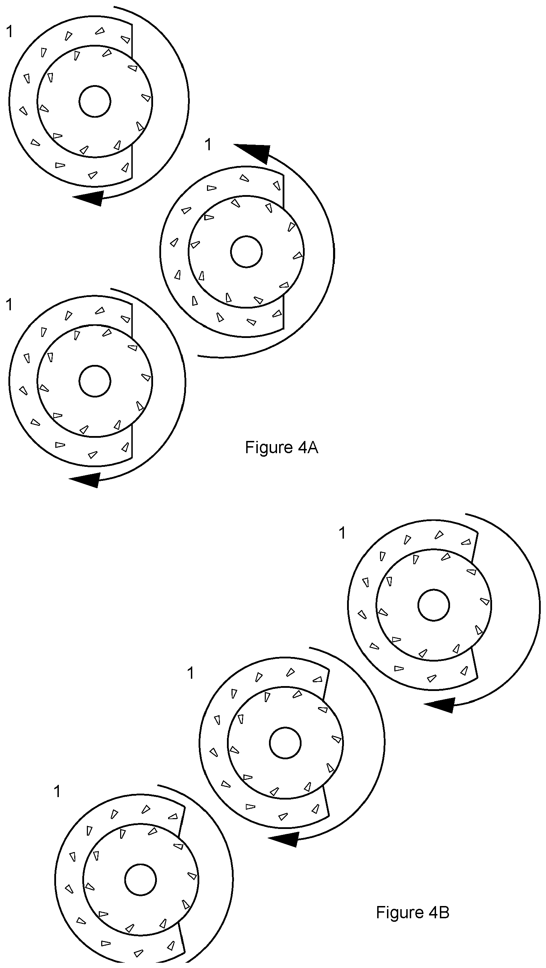

A device according to the invention may comprise two or more suction heads 1, see fig. 4A and 4B. The two or more suction heads 1 may be positioned relative to one another in any suitable configuration, such as a staggered configuration, a straight-line configuration, an angled configuration, a half-circle configuration, a V-shaped configuration, or a W-shaped configuration. When three or more suction heads 1 are provided, the distance between neighbouring suction heads 1 may be the same. Alternatively, the distance between neighbouring suction heads may be different. In a first embodiment, schematically shown in bottom view in fig. 4A, three suction heads 1 are present, placed in a staggered configuration. According to a second embodiment, three suction heads 1 are present, placed in an angled configuration, schematically shown in bottom view in fig. 4B. In each of fig. 4A and fig 4B the general direction of motion is from left to right. Helical flow around each suction head 1 is schematically indicated with a solid arrow in fig. 4A and 4B. The one or more nozzles of neighbouring suction heads 1 may be configured to drive helical flow in opposite directions, fig. 4A. Advantageously, strong shear thereby occurs between the suction heads, which may be advantageous when removing cohesive granular material. Alternatively, the one or more nozzles of neighbouring suction heads 1 may be configured to drive helical flow in the same direction, fig. 4B. Advantageously, granular material may thereby be removed in an even pattern.

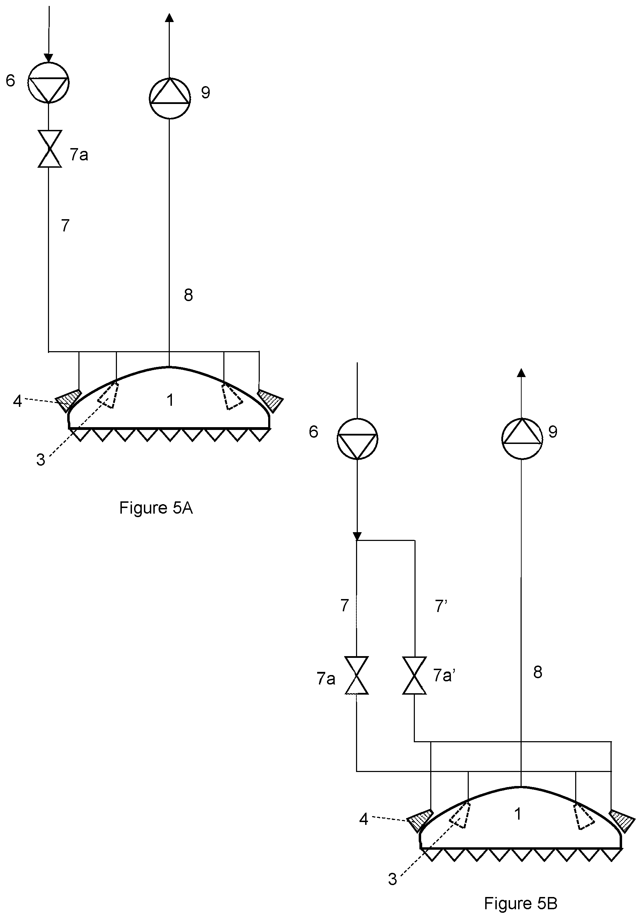

Several flowline configurations of the device are shown in fig. 5A - 5D. The device may comprise at least one pump 6, for supplying pressurized fluid to the one or more nozzles. Alternatively, the device may be configured to be coupled to an external source of pressurized fluid, such as a pressurized water supply, or a feed system for pressurized gas. The device further comprises at least one conduit 7, connecting the pump 6 or the external source of pressurized fluid to the inner nozzles 3 and / or the outer nozzles 4. The conduit 7 may comprise a control valve 7a to control the flow of pressurized fluid therethrough. The device also comprises a tube 8, for transporting fluidized granular material from the suction head 1 to a remote location. The tube may be flexible. The tube 8 may comprise a control valve (not shown) to control the flow of fluidized granular material through the tube 8. The device further comprises suction means, detailed below, for applying suction to the suction head 1 through the tube 8.

In a first configuration, shown in fig. 5A, the suction means comprise a slurry pump 9, for removing fluidized granular material from the suction head 1. A slurry pump is configured to pump a mixture of a fluid and solid particles. The tube 8 connects the outlet 1b of the suction head 1 to the slurry pump 9. When inner nozzles 3 are provided, the conduit 7 is connected to the inner nozzles 3. When outer nozzles 4 are provided, the conduit 7 is connected to the outer nozzles 4. In operation, the pump 6, or the external source of pressurized fluid, drives the emission of pressurized fluid from the inner nozzles 3 and / or the outer nozzles 4. Thereby an inner helical flow and / or an outer helical flow are formed. The slurry pump 9 applies suction to the suction head 1, thereby removing fluidized granular material through the tube 8. Advantageously, the first configuration comprises few parts, forming a cost-efficient set-up. Additionally, the device may comprise a booster pump, for boosting the suction applied by the slurry pump 9. A booster pump may, for instance, be required when granular material must be removed from large fluid depths or where suction must overcome strong inter-particle cohesion in the granular material.

In a second configuration, fig. 5B, the conduit 7 connects the pump 6, or the external source for pressurized fluid, to the inner nozzles 3. According to this configuration, the device further comprises a second conduit 7', connecting the pump 6, or the external source for pressurized fluid, to the outer nozzles 4. The second conduit 7' may also comprise a control valve 7a', to control the flow of pressurized fluid therethrough. Otherwise, the second configuration is the same as the first configuration. Advantageously, in the second configuration the flow of pressurized fluid to the inner nozzles and to the outer nozzles can be controlled separately.

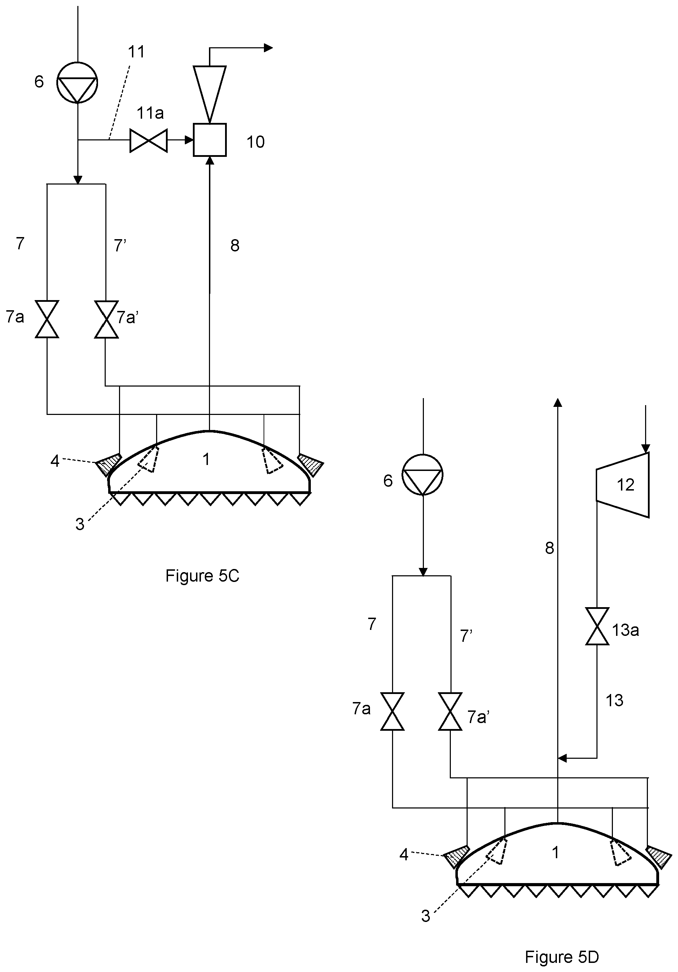

In a third configuration, fig. 5C, the suction means comprise an eductor 10. The eductor 10 is configured to generate suction based on the venturi principle. The eductor 10 is connected to the tube 8. The eductor 10 is further connected to the pump 6, or the external source for pressurized fluid, by an eductor conduit 11'. The eductor conduit 11 may be provided with a control valve 11a to control the flow of pressurized fluid through the eductor conduit 11. In operation, flow through the eductor 10 is driven by pressurized fluid from the pump 6, or the external source for pressurized fluid. A venturi effect arises in the eductor 10, thereby applying suction through the tube 8 to the suction head 1. Advantageously, the third configuration utilizes a single pump, or external source for pressurized fluid, to drive both fluidization and suction, thereby providing a simpler, more robust system. Furthermore, the eductor comprises no moving parts, making the system less prone to failures. In the third configuration the device may comprise one conduit 7 connecting the pump 6, or the external source for pressurized fluid, to the inner nozzles 3 and / or the outer nozzles 4. Alternatively, one conduit 7 connects the pump 6, or the external source for pressurized fluid, to the inner nozzles 3 and a second conduit 7' connects the pump 6, or the external source for pressurized fluid, to the outer nozzles 4.

In a fourth configuration, fig. 5D, the suction means comprise a compressor 12. The compressor is connected to the tube 8 by a compressor conduit 13. The compressor conduit 13 may comprise a control valve 13a to control the flow through the compressor conduit 13. In operation, pressurized gas, such as air, is pumped by the compressor through the tube 8, thereby generating gas lift through the effect of increased buoyancy and pressure difference between the lower part of the tube 8 and the upper part of the tube 8. Fluidized granular material is sucked into the tube 8 by the gas lift and fluidized granular material is mixed with compressed gas in the tube 8. Advantageously, handling and transport of the fluidized granular material is thereby improved. Optionally, the suction means may further comprise an additional slurry pump 9 and / or a booster pump, connected to the tube 8. Advantageously, by additionally utilizing an additional slurry pump and / or a booster pump, granular material can be removed from larger fluid depths. Further advantageously, a stronger suction may thereby be achieved, allowing removal of granular material where a strong cohesion between the particles in the granular material mass exists, or where granular material particles are heavy. In the fourth configuration the device may comprise one conduit 7 connecting the pump 6 or the pressurized system to the inner nozzles 3 and / or the outer nozzles 4. Alternatively, one conduit 7 connects the pump 6 or the pressurized system to the inner nozzles 3 and a second conduit 7' connects the pump 6 or the pressurized system to the outer nozzles 4.

The device may further comprise mounting means on which the at least one suction head 1 is mounted. The mounting means may comprise a fixed frame, a moveable frame, a vessel, a pontoon, a land-based machine, or an underwater robot, such as a bottom crawler, or a submersible drone. The mounting means may further comprise a robotic arm onto which the at least one suction head 1 is mounted. Alternatively, the mounting means may comprise at least one tow-cable for towing the at least suction head 1 over the granular material mass. Alternatively, the mounting means may further comprise means for pulling, pushing, or dragging the at least one suction head 1 behind, in front or beside a vessel, a bottom crawler, a submersible drone, or an underwater robot. The mounting means may be remotely controlled, semiautonomous or autonomous.

The device may also comprise sensor means, such as one or more cameras, a sonar system, pressure sensors, flow, mass pressure, conductivity and density measurement sensors and control equipment, depth sensors, a topography scanner and / or temperature sensors. One or more sensor means may be placed on or within the suction head 1. Preferably, the device is equipped with positioning means, such as a GPS. The GPS may comprise an underwater GPS. The device may further comprise communication means, such as one or more wired transceivers and / or wireless transceivers. The device may also comprise control means, such as a CPU, a memory, and a monitor, for control of the device. The control means may control the movement of the suction head 1, the pump 6, the slurry pump 9, the compressor 12, the various control valves 7a, 7a', 11a, 13a, the outflow direction of the inner nozzles 3 and / or the outer nozzles 4, the shearing elements 5, and or the lateral shearing element. Optionally, the device may comprise steering means, such as a joystick or control levers, for remote operation and steering of the suction head 1. Advantageously, the suction head 1 may therewith be precisely controlled, operated and moved at the location where granular material removal is desired. Alternatively, or additionally, the control means are configured to operate the device autonomously or semiautonomously.

Next, a method for removal of granular material from a granular material mass is described. The granular material may be non-submerged, partially submerged or completely submerged beneath a fluid. The method comprises providing at least a suction head 1, or a device, according to the present invention. The suction head 1 is placed onto or above the granular material mass. The suction head 1 is preferably positioned such that the side inlet 1d and / or the lower end 1a faces the granular material mass. Pressurized fluid is then emitted from the one or more nozzles. Pressurized fluid is emitted from the inner nozzles 3 to generate an inner helical flow within the suction head 1. Pressurized fluid is emitted from the outer nozzles 4 to generate an outer helical flow around the suction head 1. The outer helical flow may have the same general flow direction as the inner helical flow. Alternatively, the outer helical flow may have the opposite general flow direction as the inner helical flow. The pressurized fluid may comprise an additive, such as a dissolving agent, a cleaning agent, a surfactant, a viscosity modifier, a colorant, a wetting agent, a filler, an anti-fungal agent, an anti-bacterial agent, or combinations thereof. Advantageously, a dissolving agent may counteract inter-particle adhesion within the granular material, thereby improving fluidization. The inner helical flow and / or the outer helical flow fluidize the granular material. Suction is applied through the outlet 1b to remove the fluidized granular material through the one or more side inlets 1d and optionally through the bottom inlet.

The fluidized granular material is then removed from the suction head 1 by suction, applied through the outlet 1b and the tube 8, The suction is driven by the slurry pump 9, by the eductor 10, or by gas lift by the compressor 11. Optionally, the suction is additionally driven by the booster pump. The fluidized granular material may then be deposited from the outlet of the tube 8, either into a temporary storage space, such as the loading bay of a vessel, or at a different or remote location, either onshore or offshore. Optionally, before depositing the fluidized granular material, the fluidized granular material may be filtered and / or processed, for instance to separate the removed granular material from the fluid.

The suction head 1 and / or the method of the present invention may be utilized for mining operations, such as seafloor mining, land-based mining, coastal reinforcement operations or the construction of artificial peninsulas or islands, the excavation of holes for the anchoring of equipment or the excavation of trenches for the laying of cables, salvaging operations for releasing stranded vessels, granular material removal behind a dam or from an artificial basin, or granular material removal (dredging) from a waterway, such as a channel, a river, a lake, a harbor, or a marine navigation channel. The device and / or the method of the present invention may also be utilized for the removal of accumulated granular materials from industrial tanks, vessels, or basins.

### List of references

- 1: suction head
- 1a: lower end
- 1b: outlet
- 1b': outlet end section
- 1c: side wall
- 1d: side inlet
- 1e: inner contour
- 2: filter
- 3: inner nozzle
- 3a: secondary inner nozzle
- 4: outer nozzle
- 4a: secondary outer nozzle
- 5: shearing elements
- 5a: shearing nozzle
- 5b: mechanical shearing element
- 5c: arm
- 6: pump
- 7: conduit
- 7': second conduit
- 7a: control valve
- 7a': control valve
- 8: tube
- 9: slurry pump
- 10: eductor
- 11: eductor conduit
- 11a: control valve
- 12: compressor
- 13: compressor conduit
- 13a: control valve

## Claims

1. A device for removing granular material by suction, the device comprising a suction head (1), the suction head (1) comprising:
- a lower end (1a);
- an outlet (1b) for removing granular material from the suction head (1);
- side walls (1c), extending from the lower end (1a) to the outlet (1b);
- one side inlet (1d) for the inflow of fluidized granular material into the suction head (1), the one side inlet (1d) being located in a side wall (1c); and
- one or more inner nozzles (3), mounted on an inside of the suction head (1) and directed to generate an inner helical flow within the suction head (1), and one or more outer nozzles (4), mounted on an outside of the suction head (1) and directed to generate an outer helical flow around the suction head (1) in the same direction as the inner helical flow within the suction head (1), whereby the one or more inner nozzles (3) and the one or more outer nozzles (4) are configured to emit a pressurized fluid for fluidizing granular material.

2. The device of claim 1, wherein the side inlet (1d) extends over 2 - 98%, preferably 5 - 70%, more preferably 15 - 60%, most preferably 20 - 50%, of the circumference of the lower end (1a).

3. The device of any of claims 1 - 2, wherein the side inlet (1d) comprises at least 2%, preferably at least 10%, more preferably at least 30%, of the total area for the inflow of fluidized granular material into the suction head (1).

4. The device of any one of claims 1 - 3, wherein the lower end (1a) is closed.

5. The device of any one of claims 1 - 3, wherein the lower end (1a) comprises a bottom inlet for the inflow of granular material into the suction head (1).

6. The device of any one of claims 1 -5, wherein the outflow direction of the one or more nozzles (3) is adjustable.

7. The device of any one of claims 1 - 6, wherein the one or more nozzles comprise one or more slits.

8. The device of any one of claims 1 - 7, wherein an end-section (1 b') of the outlet (1b) extends into the suction head (1).

9. The device of any one of claims 1 - 8, further comprising one or more shearing elements (5) and / or at least one lateral shearing element.

10. The device of any one of claims 1 - 9, further comprising
- at least one pump (6) for supplying pressurized fluid to the one or more nozzles; and
- at least one conduit (7), connecting the pump (6) to the one or more nozzles.

11. The device of any one of claims 1 - 10, further comprising a tube (8) connected to the outlet (1b), for transporting fluidized granular material from the suction head (1) to a remote location, and suction means for applying suction to through the tube (8).

12. The device of claim 11, wherein the suction means comprise a slurry pump (9), an eductor (10), or a compressor (12).

13. The device of any one of claims 1 - 12, comprising multiple suction heads (1) placed in a staggered configuration, a straight-line configuration, an angled configuration, a half-circle configuration, a V-shaped configuration, or a W-shaped configuration.

14. The device of claim 13, wherein the one or more outer nozzles (5) of neighbouring suction heads (1) are configured to drive outer helical flow around the neighbouring suction heads (1) in opposite directions or wherein the one or more outer nozzles (5) of neighbouring suction heads (1) are configured to drive outer helical flow around the neighbouring suction heads (1) in the same direction.

15. The device of any one of claims 1 - 14, further comprising mounting means on which the at least one suction head (1) is mounted, such as a robotic arm, an underwater robot, a bottom crawler, a submersible drone, a vessel, a pontoon, a fixed frame, or a land-based machine.

16. A method for removal of granular material by suction from a granular material mass, the method comprising:
- providing a device according to any one of claims 1 - 15;
- placing the suction head (1) onto or above the granular material mass;
- emitting pressurized fluid from the one or more nozzles to locally fluidize the granular material; and
- applying suction through the outlet (1b) to remove the fluidized granular material through the one or more side inlets (1d).

17. The method of claim 16, wherein the pressurized fluid comprises an additive, such as a dissolving agent, a cleaning agent, a surfactant, a coloring agent, a viscosity modifier, a wetting agent, a filler, an anti-fungal agent, an anti-bacterial agent, or combinations thereof.

18. The method of any one of claims 16, 17, wherein the removal of granular material comprises: a mining operation, a coastal reinforcement operation, the construction of an artificial peninsula or artificial island, the anchoring of equipment or the laying of cables or pipes, a salvage operation for releasing a stranded or sunk vessel, the removing of granular material from behind an artificial dam, the removing of granular material from a vessel, a container or a basin, and / or the dredging of a waterway, such as a channel, a river, a lake, a harbor, or a marine navigation channel.

## Patentansprüche

1. Vorrichtung zum Entfernen von körnigem Material durch Saugen, wobei die Vorrichtung einen Saugkopf (1) umfasst, wobei der Saugkopf (1) umfasst:
- ein unteres Ende (1a);
- einen Auslass (1b) zum Entfernen von körnigem Material aus dem Saugkopf (1);
- Seitenwände (1c), die sich von dem unteren Ende (1a) zu dem Auslass (1b) erstrecken;
- einen seitlichen Einlass (1d) für das Einströmen von fluidisiertem körnigem Material in den Saugkopf (1), wobei der eine seitliche Einlass (1d) in einer Seitenwand (1c) angeordnet ist; und
- eine oder mehrere innere Düsen (3), die an einer Innenseite des Saugkopfs (1) montiert sind und darauf gerichtet sind, eine innere schraubenförmige Strömung innerhalb des Saugkopfs (1) zu erzeugen, und eine oder mehrere äußere Düsen (4), die an einer Außenseite des Saugkopfs (1) montiert sind und darauf gerichtet sind, eine äußere schraubenförmige Strömung um den Saugkopf (1) in der gleichen Richtung wie die innere schraubenförmige Strömung innerhalb des Saugkopfs (1) zu erzeugen, wobei die eine oder mehreren inneren Düsen (3) und die eine oder mehreren äußeren Düsen (4) dazu ausgebildet sind, ein druckbeaufschlagtes Fluid zum Fluidisieren von körnigem Material auszustoßen.

2. Vorrichtung nach Anspruch 1, wobei sich der seitliche Einlass (1d) über 2-98 %, bevorzugt 5-70 %, bevorzugter 15-60 %, besonders bevorzugt 20-50 % des Umfangs des unteren Endes (1a) erstreckt.

3. Vorrichtung nach einem der Ansprüche 1-2, wobei der seitliche Einlass (1 d) mindestens 2 %, bevorzugt mindestens 10 %, bevorzugter mindestens 30 % der Gesamtfläche für das Einströmen von fluidisiertem körnigem Material in den Saugkopf (1) umfasst.

4. Vorrichtung nach einem der Ansprüche 1-3, wobei das untere Ende (1a) geschlossen ist.

5. Vorrichtung nach einem der Ansprüche 1-3, wobei das untere Ende (1a) einen Bodeneinlass für das Einströmen von körnigem Material in den Saugkopf (1) umfasst.

6. Vorrichtung nach einem der Ansprüche 1-5, wobei die Ausströmrichtung der einen oder mehreren Düsen (3) einstellbar ist.

7. Vorrichtung nach einem der Ansprüche 1-6, wobei die eine oder mehreren Düsen einen oder mehrere Schlitze umfassen.

8. Vorrichtung nach einem der Ansprüche 1-7, wobei sich ein Endabschnitt (1b') des Auslasses (1b) in den Saugkopf (1) erstreckt.

9. Vorrichtung nach einem der Ansprüche 1-8, weiter umfassend ein oder mehrere Scherelemente (5) und /oder mindestens ein laterales Scherelement.

10. Vorrichtung nach einem der Ansprüche 1-9, weiter umfassend
- mindestens eine Pumpe (6) zum Zuführen von druckbeaufschlagtem Fluid zu der einen oder den mehreren Düsen; und
- mindestens eine Leitung (7), die die Pumpe (6) mit der einen oder den mehreren Düsen verbindet.

11. Vorrichtung nach einem der Ansprüche 1-10, weiter umfassend ein mit dem Auslass (1b) verbundenes Rohr (8), zum Transportieren von fluidisiertem körnigem Material von dem Saugkopf (1) zu einem entfernten Ort, und Saugmittel zum Anlegen einer Saugkraft durch das Rohr (8).

12. Vorrichtung nach Anspruch 11, wobei die Saugmittel eine Schlammpumpe (9), einen Ejektor (10) oder einen Kompressor (12) umfassen.

13. Vorrichtung nach einem der Ansprüche 1-12, umfassend mehrere Saugköpfe (1), die in einer versetzten Anordnung, einer geradlinigen Anordnung, einer winkligen Anordnung, einer halbkreisförmigen Anordnung, einer V-förmigen Anordnung oder einer W-förmigen Anordnung angeordnet sind.

14. Vorrichtung nach Anspruch 13, wobei die eine oder mehreren äußeren Düsen (5) benachbarter Saugköpfe (1) dazu ausgebildet sind, eine äußere schraubenförmige Strömung um die benachbarten Saugköpfe (1) in entgegengesetzte Richtungen anzutreiben, oder wobei die eine oder mehreren äußeren Düsen (5) benachbarter Saugköpfe (1) dazu ausgebildet sind, eine äußere schraubenförmige Strömung um die benachbarten Saugköpfe (1) in der gleichen Richtung anzutreiben.

15. Vorrichtung nach einem der Ansprüche 1-14, weiter umfassend Montagemittel, auf denen der mindestens eine Saugkopf (1) montiert ist, wie etwa ein Roboterarm, ein Unterwasserroboter, eine Bodenraupe, eine Tauchdrohne, ein Schiff, ein Ponton, ein fester Rahmen oder eine landgestützte Maschine.

16. Verfahren zum Entfernen von körnigem Material durch Saugen aus einer Masse aus körnigem Material, wobei das Verfahren umfasst:
- Bereitstellen einer Vorrichtung nach einem der Ansprüche 1-15;
- Platzieren des Saugkopfs (1) auf die Masse aus körnigem Material oder über diese;
- Ausstoßen von druckbeaufschlagtem Fluid aus der einen oder den mehreren Düsen, um das körnige Material lokal zu fluidisieren; und
- Anlegen einer Saugkraft über den Auslass (1b), um das fluidisierte körnige Material durch einen oder mehrere seitliche Einlässe (1d) zu entfernen.

17. Verfahren nach Anspruch 16, wobei das druckbeaufschlagte Fluid einen Zusatzstoff umfasst, wie etwa ein Lösemittel, ein Reinigungsmittel, ein Tensid, ein Färbemittel, einen Viskositätsmodifikator, ein Benetzungsmittel, einen Füllstoff, ein antimykotisches Mittel, ein antibakterielles Mittel oder Kombinationen davon.

18. Verfahren nach einem der Ansprüche 16, 17, wobei das Entfernen von körnigem Material umfasst: einen Bergbaubetrieb, einen Küstenverstärkungsvorgang, die Errichtung einer künstlichen Halbinsel oder künstlichen Insel, das Verankern von Ausrüstung oder das Verlegen von Kabeln oder Rohren, einen Bergungsvorgang zum Freisetzen eines auf Grund gelaufenen oder gesunkenen Schiffs, das Entfernen von körnigem Material hinter einem künstlichen Damm, das Entfernen von körnigem Material aus einem Schiff, einem Behälter oder einem Becken und / oder das Ausbaggern einer Wasserstraße, wie etwa eines Kanals, eines Flusses, eines Sees, eines Hafens oder eines Schifffahrtskanals.

## Revendications

1. Dispositif d'élimination de matériau granulaire par aspiration, le dispositif comprenant une tête d'aspiration (1), la tête d'aspiration (1) comprenant :
- une extrémité inférieure (1a) ;
- une sortie (1b) pour éliminer du matériau granulaire de la tête d'aspiration (1) ;
- des parois latérales (1c), s'étendant de l'extrémité inférieure (1a) à la sortie (1b) ;
- une entrée latérale (1d) pour l'entrée de matériau granulaire fluidisé dans la tête d'aspiration (1), l'une entrée latérale (1d) étant située dans une paroi latérale (1c) ; et
- une ou plusieurs buses intérieures (3), montées sur un intérieur de la tête d'aspiration (1) et dirigées pour générer un écoulement hélicoïdal intérieur dans la tête d'aspiration (1), et une ou plusieurs buses extérieures (4), montées sur un extérieur de la tête d'aspiration (1) et dirigées pour générer un écoulement hélicoïdal extérieur autour de la tête d'aspiration (1) dans la même direction que l'écoulement hélicoïdal intérieur dans la tête d'aspiration (1), de telle sorte que la ou les buses intérieures (3) et la ou les buses extérieures (4) soient configurées pour émettre un fluide sous pression pour fluidiser du matériau granulaire.

2. Dispositif selon la revendication 1, dans lequel l'entrée latérale (1d) s'étend sur 2 - 98 %, préférablement 5 - 70 %, plus préférablement 15 - 60 %, le plus préférablement 20 - 50 %, de la circonférence de l'extrémité inférieure (1a).

3. Dispositif selon l'une quelconque des revendications 1 et 2, dans lequel l'entrée latérale (1d) comprend au moins 2 %, préférablement au moins 10 %, plus préférablement au moins 30 %, de la surface totale pour l'entrée de matériau granulaire fluidisé dans la tête d'aspiration (1).

4. Dispositif selon l'une quelconque des revendications 1 à 3, dans lequel l'extrémité inférieure (1a) est fermée.

5. Dispositif selon l'une quelconque des revendications 1 à 3, dans lequel l'extrémité inférieure (1a) comprend une entrée inférieure pour l'entrée de matériau granulaire dans la tête d'aspiration (1).

6. Dispositif selon l'une quelconque des revendications 1 à 5, dans lequel la direction d'écoulement de sortie de la ou des buses (3) est réglable.

7. Dispositif selon l'une quelconque des revendications 1 à 6, dans lequel la ou les buses comprennent une ou plusieurs fentes.

8. Dispositif selon l'une quelconque des revendications 1 à 7, dans lequel une section d'extrémité (1b') de la sortie (1b) s'étend dans la tête d'aspiration (1).

9. Dispositif selon l'une quelconque des revendications 1 à 8, comprenant en outre un ou plusieurs éléments de cisaillement (5) et *I* ou au moins un élément latéral de cisaillement.

10. Dispositif selon l'une quelconque des revendications 1 à 9, comprenant en outre
- au moins une pompe (6) pour fournir du fluide sous pression à la ou aux buses ; et
- au moins un conduit (7), raccordant la pompe (6) à la ou aux buses.

11. Dispositif selon l'une quelconque des revendications 1 à 10, comprenant en outre un tube (8) raccordé à la sortie (1b), pour transporter du matériau granulaire fluidisé depuis la tête d'aspiration (1) vers un emplacement distant, et des moyens d'aspiration pour appliquer une aspiration à travers le tube (8).

12. Dispositif selon la revendication 11, dans lequel les moyens d'aspiration comprennent une pompe pour suspensions (9), un éjecteur (10), ou un compresseur (12).

13. Dispositif selon l'une quelconque des revendications 1 à 12, comprenant plusieurs têtes d'aspiration (1) placées dans une configuration en quinconce, une configuration en ligne droite, une configuration angulaire, une configuration en demicercle, une configuration en V, ou une configuration en W.

14. Dispositif selon la revendication 13, dans lequel la ou les buses extérieures (5) de têtes d'aspiration (1) voisines sont configurées pour entraîner un écoulement hélicoïdal extérieur autour des têtes d'aspiration (1) voisines dans des directions opposées ou dans lequel la ou les buses extérieures (5) de têtes d'aspiration (1) voisines sont configurées pour entraîner un écoulement hélicoïdal extérieur autour des têtes d'aspiration (1) voisines dans la même direction.

15. Dispositif selon l'une quelconque des revendications 1 à 14, comprenant en outre des moyens de montage sur lesquels l'au moins une tête d'aspiration (1) est montée, tels qu'un bras robotisé, un robot sous-marin, un engin de fond sur chenilles, un drone submersible, un navire, un ponton, un cadre fixe, ou une machine terrestre.

16. Procédé d'élimination de matériau granulaire par aspiration à partir d'une masse de matériau granulaire, le procédé comprenant les étapes suivantes :
- fournir un dispositif selon l'une quelconque des revendications 1 à 15 ;
- placer la tête d'aspiration (1) sur ou au-dessus de la masse de matériau granulaire ;
- émettre du fluide sous pression depuis la ou les buses pour fluidiser localement le matériau granulaire ; et
- appliquer une aspiration à travers la sortie (1b) pour éliminer le matériau granulaire fluidisé à travers la ou les entrées latérales (1d).

17. Procédé selon la revendication 16, dans lequel le fluide sous pression comprend un additif, tel qu'un agent de dissolution, un agent de nettoyage, un tensioactif, un agent colorant, un modificateur de viscosité, un agent mouillant, une charge, un agent antifongique, un agent antibactérien, ou des combinaisons de ceux-ci.

18. Procédé selon l'une quelconque des revendications 16 et 17, dans lequel l'élimination de matériau granulaire comprend : une opération minière, une opération de renforcement de la côte, la construction d'une péninsule artificielle ou d'une île artificielle, l'ancrage d'équipements ou la pose de câbles ou de tuyaux, une opération de sauvetage pour libérer un navire échoué ou coulé, l'élimination de matériau granulaire depuis derrière un barrage artificiel, l'élimination de matériau granulaire depuis un navire, un conteneur ou un bassin, et *I* ou le dragage d'une voie navigable, telle qu'un chenal, une rivière, un lac, un port, ou un chenal de navigation maritime.
